# FASCICULE DE BREVET EUROPEEN

(11) **EP 2 820 354 B1**
(45) Date de publication et mention de la délivrance du brevet: **02.11.2016**
(21) Numéro de dépôt: 13707400.1
(22) Date de dépôt: 05.03.2013
(51) Int. Cl.: F24D 17/00, F24H 9/00, F28D 21/00, F16K 7/00, E03C 1/00, F28G 9/00, F28D 9/00

(54) **DISPOSITIF POUR LA RÉCUPÉRATION DE L'ÉNERGIE THERMIQUE D'UN ÉCOULEMENT D'EAUX USÉES**
VORRICHTUNG FÜR WÄRMEENERGIERÜCKGEWINNUNG AUS EINEM ABWASSERSTROM
DEVICE FOR RECOVERING THERMAL ENERGY FROM A FLOW OF WASTE WATER

(30) Priorité: 13.08.2012 FR 1202241
(43) Date de publication de la demande: 07.01.2015
(73) Titulaire: Energy Harvesting Tech, 31520 Ramonville St. Agne (FR)
(72) Inventeur: DUROU, Hugo, F-31000 Toulouse (FR); RICOU, Thomas, F-31000 Toulouse (FR)
(74) Mandataire: Ipside
(86) Numéro de dépôt international: PCT/EP2013/054448
(87) Numéro de publication internationale: WO 2013/131930

(56) Documents cités:
- WO-A1-2011/138467
- AT-A4- 509 213
- CA-A1- 1 148 934
- DE-A1- 2 908 679
- DE-U1- 29 615 555
- FR-A1- 2 381 257
- FR-A1- 2 939 186
- FR-A1- 2 970 071
- GB-A- 2 069 126

## Description

L'invention concerne un dispositif pour la récupération de l'énergie thermique d'un écoulement d'eaux usées. Le dispositif est plus particulièrement, mais non exclusivement, adapté à des installations sanitaires domestiques ou collectives.

Un dispositif de récupération de la chaleur des eaux usées collectées par un receveur est connu de l'art antérieur, notamment du document WO 2011/138467. Ce dispositif de l'art antérieur récupère la chaleur des eaux usées collectées par un receveur, par exemple le receveur d'une douche, au moyen d'un échangeur thermique à plaques. Un tel dispositif offre des performances thermiques élevées, toutefois, dans certaines circonstances, notamment lorsque l'échangeur de ce dispositif doit être installé dans une zone exiguë et peu accessible, ces conditions d'installation ne permettent pas le fonctionnement du dispositif dans des conditions optimales. Ainsi, lorsque ledit échangeur est placé à demeure dans un faux plafond ou dans un solivage, et plus particulièrement lorsque, pour des raisons d'encombrement, celui-ci est posé à l'horizontal, ledit échangeur se comporte comme un siphon, et une bulle d'air se crée au sommet de l'échangeur, bulle d'air qui réduit la surface utile d'échange et donc le rendement du dispositif de récupération d'énergie thermique, tout en concentrant l'encrassement dans un volume réduit de l'échangeur. Ce risque d'encrassement est encore augmenté lorsque, pour ne pas créer de phénomène de double siphon et nuire à l'évacuation des eaux usées du receveur, le siphon traditionnel de la bonde du receveur est avantageusement supprimé. Or, le décolmatage de l'échangeur est une tâche délicate lorsque celui-ci est éloigné de la bonde d'écoulement et qu'il n'est pas facilement accessible.

Le document FR 2 939 186 divulgue un dispositif pour la récupération de l'énergie thermique d'un écoulement d'eaux usées, la circulation des eaux usées étant assurée par une unité de pompage, et comprenant un filtre desdites eaux usées en amont de l'échangeur. Une vanne permet en cas de colmatage du filtre de bipasser l'échangeur pour envoyer directement les eaux usées à l'égout.

Le document CA 1 148 934 divulgue un dispositif pour la récupération de la chaleur d'eaux usées s'écoulant par écoulement gravitaire au travers d'un échangeur, et des moyens permettant de bipasser l'échangeur et d'envoyer directement à l'égout lesdites eaux usées lorsque celles-ci ne sont pas suffisamment chaudes.

Le document WO2011/138467 cité ci-dessus, décrit un dispositif permettant, au moyen d'un échangeur à plaques, de récupérer la chaleur d'un écoulement gravitaire d'eaux usées. Ledit dispositif comprend des moyens pour bipasser l'échangeur et envoyer directement lesdites eaux usées à l'égout mais ces moyens ne sont pas pilotés. De même ce documen divulgue des moyens pour connecter de l'eau sous pression dans le circuit d'écoulement des eaux usées ce flux de purge étant dans le même sens que l'écoulement gravitaire des eaux usées.

Le document DE 29 08 679 décrit un dispositif de récupération de la chaleur des eaux usées et de la récupération desdites eaux usées, notamment pour l'alimentation d'un réservoir de chasse d'eau. L'écoulement à travers l'échangeur est gravitaire mais les eaux usées passent par un filtre au préalable. Des moyens permettent de bipasser l'échangeur et d'envoyer directement le flux d'eaux usées à l'égout. Un système de vannes permet d'envoyer de l'eau usée filtrée sous pression, au moyen d'une pompe, à travers le filtre jusqu'à l'égout sans passer par l'échangeur, pour décolmater le filtre, ou, à travers le filtre, puis l'échangeur. Dans ce dernier cas la circulation sous pression se fait, au niveau de l'échangeur, dans le même sens que l'écoulement gravitaire.

Le document FR 2 381 257 décrit un dispositif pour la récupération de la chaleur d'un écoulement gravitaire d'eaux usées, comprenant un échangeur. Avant d'entrer dans l'échangeur les eaux usées passent par un décanteur. Des électrovannes permettent de bipasser l'échangeur et/ou le décanteur et d'envoyer les eaux usées directement à l'égout. Ce dispositif comprend une vannedite de purge pour vider l'échangeur, non alimenté en eaux usées.

Le document AT 509 213 décrit un dispositif pour la récupération de la chaleur d'un écoulement d'eaux usées, essentiellement gravitaire. Le dispositif comprend un échangeur de chaleur traversé par les eaux usées. Selon certains modes de réalisation le dispositif comprend des moyens permettant de bipasser l'échangeur et d'envoyer directement les eaux usées à l'égout. Une pompe permet de faire circuler de l'eau sous pression, provenant du circuit d'eaux usées et éventuellement additionnée d'un agent nettoyant, dans le trajet emprunté par les eaux usées dans l'échangeur.

Le document GB 2 069 126 décrit un dispositif pour récupérer la chaleur des eaux usées, la circulation desdites eaux usées étant assurée par une pompe. Ce dispositif comprend un échangeur traversé par les eaux usées et par l'eau propre également mise en circulation par une pompe. L'installation comprend des moyens permettant d'envoyer de l'eau propre sous pression dans le trajet des eaux usées dans l'échangeur.

Le document DE 296 15 555 décrit un dispositif pour la récupération de la chaleur d'eaux usées, celles-ci étant mises en circulation par une pompe. Ce dispositif comprend un échangeur. En cas de colmatage des moyens permettent de faire circuler de l'eau propre sous pression dans l'échangeur selon deux sens de circulation. Selon un premier sens de circulation, l'eau propre circule dans le même sens que l'eau usée jusqu'à l'égout. Selon un deuxième sens de circulation utilisable uniquement pendant une très courte durée, le flux est envoyé en sens inverse. Dans ce cas, le flux n'est pas envoyé à l'égout mais renvoyé vers le receveur, raison pour laquelle il ne peut être utilisé que pour réaliser un pulse pour faire sauter un bouchon.

L'invention vise à résoudre les inconvénients de l'art antérieur et concerne à cette fin un dispositif pour la récupération de l'énergie thermique d'un écoulement des eaux usées, comportant un receveur d'eaux usées et comprenant :
a. un échangeur à plaques traversé par deux flux fluides séparés :
   ai. une première entrée de l'échangeur, placée en communication hydraulique avec l'orifice d'écoulement d'eaux usées du receveur de sorte à créer un premier flux traversant ledit échangeur par écoulement gravitaire entre cette première entrée et une première sortie connectée à l'égout l'échangeur agissant comme un siphon dans l'écoulement ;
   aii. une deuxième entrée de l'échangeur, placée en communication hydraulique avec une canalisation d'eau propre à la pression du réseau de sorte à créer un second flux traversant l'échangeur sans se mêler au premier flux, entre cette deuxième entrée et une deuxième sortie dudit échangeur ;
b. des moyens de connexion, aptes à réaliser une connexion hydraulique, dite de court circuit, entre la première entrée de l'échangeur et l'égout ;
c. des moyens connexion pilotés pour réaliser une connexion hydraulique temporaire entre l'arrivée d'eau froide sanitaire à la pression du réseau et la première sortie de l'échangeur de sorte à créer un flux d'eau froide sanitaire, dit de nettoyage, passant par l'échangeur, entre l'arrivée d'eau propre et l'égout.

Ainsi, en cas de colmatage de l'échangeur, celui-ci est avantageusement court-circuité de sorte à permettre la vidange du receveur. En cas d'encrassement, ledit échangeur est décolmaté à distance par une commande spécifique, toujours sans autre besoin d'énergie que la pression du réseau d'eau froide sanitaire. En créant un flux d'eau propre sous pression dans le trajet normal d'écoulement des eaux usées mais en sens inverse, le dispositif objet de l'invention permet, selon ce mode de réalisation, non seulement de décolmater l'échangeur par ce flux, mais aussi d'utiliser ce flux pour remplir ledit échangeur et chasser la bulle d'air emprisonnée au sommet de celui-ci. Ces moyens coopèrent avec les moyens de court-circuit, pour envoyer directement à l'égout les bouchons expulsés par ce flux de nettoyage.

L'invention est avantageusement mise en oeuvre selon les modes de réalisation exposés ci-après, lesquels sont à considérer individuellement ou selon toute combinaison techniquement opérante.

Avantageusement, les moyens de connexion en court-circuit comportent :
bi. une vanne dite de cour-circuit.

Ainsi le court-circuit de l'échangeur est réalisable à tout moment, même en l'absence de colmatage.

Avantageusement, la vanne de court-circuit est une vanne pilotée et le dispositif objet de l'invention comprend des moyens de pilotage de ladite vanne. Ainsi, la commande de la vanne de court-circuit est, sans difficulté, placée à distance de l'échangeur de sorte à l"utiliser aisément.

Avantageusement, les moyens de connexion pilotés comprennent :
bii. une vanne pilotée sur la connexion hydraulique entre l'évacuation du receveur et la première entrée de l'échangeur.

Ainsi, la fermeture de cette vanne empêche toute remontée du flux de nettoyage vers le receveur.

Avantageusement, les moyens de connexion pilotés comprennent :
biii. une vanne (142) pilotée dite d'obturation de l'écoulement, entre la première sortie (131) de l'échangeur et l'égout (120).

Ainsi, l'obturation de cette vanne permet d'injecter un flux sous pression de nettoyage dans l'échangeur, même fortement colmaté, sans ce flux ne s'écoule préférentiellement vers l'égout.

Ainsi, par l'intermédiaire de simples vannes, le dispositif objet de l'invention permet de réaliser les opérations de décolmatage et de remplissage décrites ci-avant, mais aussi de court-circuiter l'échangeur en cas de bouchage de celui-ci.

Avantageusement, les vannes pilotées placées sur les canalisations véhiculant des eaux usées sont des vannes à manchon pilotées par la pression du réseau d'eau froide sanitaire. Ainsi, le dispositif objet de l'invention est mis en oeuvre sans autre forme d'énergie que la pression du réseau d'eau. Ces vannes à Imanchon permettent en outre de conserver des section de passage importantes compatibles avec l'évacuation des eaux usées.

Avantageusement, le pilotage des vannes à manchon est obtenu au moyen d'une vanne à 4 voies alimentée par le réseau d'eau froide sanitaire. Ainsi, l'ensemble dispositif est commandé par la manoeuvre d'une commande unique, distante de l'échangeur.

Selon un mode de réalisation avantageux, le dispositif objet de l'invention comporte :
d. des moyens, dits purge, aptes à mettre en communication avec le réseau d'eau froide sanitaire la première sortie de l'échangeur et à mettre en communication le pilote de la vanne à manchon d'obturation de l'écoulement avec une pression d'obturation.

Ainsi, une commande unique permet l'obturation de la vanne à manchon, de l'évacuation de l'échangeur et la création d'un flux de nettoyage dans ledit échangeur.

Selon une première variante de ce mode de réalisation, les moyens de purge comportent :
di. un distributeur monostable normalement fermé et ouvert pour une pression définie, apte à mettre la première sortie de l'échangeur en communication avec le réseau d'eau froide sanitaire en amont de la vanne à manchon et de l'égout ;
dii. une branche mettant en communication hydraulique le pilote dudit distributeur monostable avec le pilote de la vanne à manchon d'obturation de l'écoulement et le réseau d'eau froide sanitaire par l'intermédiaire d'une vanne, dite vanne de purge.

Ainsi, le dispositif objet de l'invention ne comprend que très peu de vannes et d'organes de commande. Il est ainsi plus fiable, très facile à installer et à commander.

Selon une deuxième variante du mode réalisation précédent, les moyens de purge comportent :
diii. une vanne, dite vanne de purge, et un circuit aptes à mettre en communication hydraulique selon deux branches en dérivation, le pilote de la vanne à manchon d'obturation de l'écoulement et la première sortie de l'échangeur avec le réseau d'eau froide sanitaire ;
div. des moyens aptes à créer un perte de charge dans la branche en communication hydraulique avec la première sortie de l'échangeur.

Ainsi le dispositif objet de l'invention est encore simplifié, mais de plus, la pression d'obturation de la vanne à manchon est d'autant plus élevée que la perte de charge dans la branche en communication hydraulique avec la première sortie de l'échangeur est importante, c'est-à-dire que cette pression d'obturation est d'autant plus élevée que l'échangeur est colmaté. Aussi, ce mode de réalisation améliore l'efficacité du décolmatage tout en simplifiant l'installation.

Avantageusement, la vanne de purge est une vanne programmable. Ainsi le dispositif objet de l'invention est décolmaté de manière automatique à intervalle de temps régulier.

Avantageusement, le dispositif objet de l'invention comporte :
e. une branche, dite de retour progressif, mettant en communication hydraulique en dérivation le pilote de la troisième vanne à manchon et l'égout laquelle branche comprend des moyens aptes à réaliser une perte de charge dans ladite branche.

Ainsi, la purge est avantageusement utilisable pour le remplissage de l'échangeur.

Selon un mode de réalisation avantageux, les moyens aptes à réaliser une perte de charge dans la branche de retour progressif comprennent une pastille d'obturation comportant une ouverture de faible diamètre. Ce mode de réalisation est particulièrement simple et économique de mise en oeuvre.

Alternativement, les moyens aptes à réaliser une perte de charge dans la branche de retour progressif comprennent une valve d'étranglement réglable. Ce mode de réalisation moins économique permet une adaptation fine du dispositif lors de l'installation.

L'invention concerne également un procédé pour la mise en eau d'un dispositif selon l'invention, lequel procédé comprend une étape consistant à remplir l'échangeur et chasser l'air emprisonnée dans la partie de l'échangeur traversée par le flux d'eaux usées en actionnant la purge. Ainsi cette mise en eau est réalisée de manière très régulière et facilement par l'utilisateur en actionnant la purge, et l'échangeur conserve toujours son efficacité.

L'invention est exposée ci-après selon ses modes de réalisation préférés, nullement limitatifs, et en référence aux figures 1 à 8, dans les quelles :
- la figure 1 montre un schéma hydraulique de principe d'un exemple de réalisation du dispositif objet de l'invention ;
- la figure 2 représente selon une vue en perspective, un exemple de réalisation d'un échangeur comportant des connexions hydrauliques équipées de vannes à manchon sur sa première entrée et sa première sortie ;
- la figure 3 est une vue en coupe d'une vanne à manchon en position non passante ;
- la figure 4 représente un schéma hydraulique de principe correspondant à un autre exemple de réalisation du dispositif objet de l'invention ;
- la figure 5 montre selon une vue en perspective un exemple de réalisation du dispositif objet de l'invention et les flux qui s'y produisent en fonction de la situation, figure 5A, dans le cas d'un fonctionnement nominal, figure 5B en cas de colmatage de l'échangeur et figure 5C dans le cas de l'application d'un flux de nettoyage ;
- la figure 6 est un schéma hydraulique de principe d'un autre exemple de réalisation du dispositif objet de l'invention utilisant la configuration de la figure 5 ;
- la figure 7 montre selon une vue de dessus schématique en coupe, un exemple de réalisation d'un purge utilisant le dispositif de la figure 6 ;
- et la figure 8 représente schématiquement les étapes de mise en oeuvre du procédé de mise en eau selon l'invention, figure 8A, en situation de fonctionnement normale sans mise en oeuvre du procédé objet de l'invention, figure 8B au cours du remplissage de l'échangeur selon le procédé objet de l'invention et figure 8C en fonctionnement normale après la mise en oeuvre du procédé de mise en eau selon l'invention.

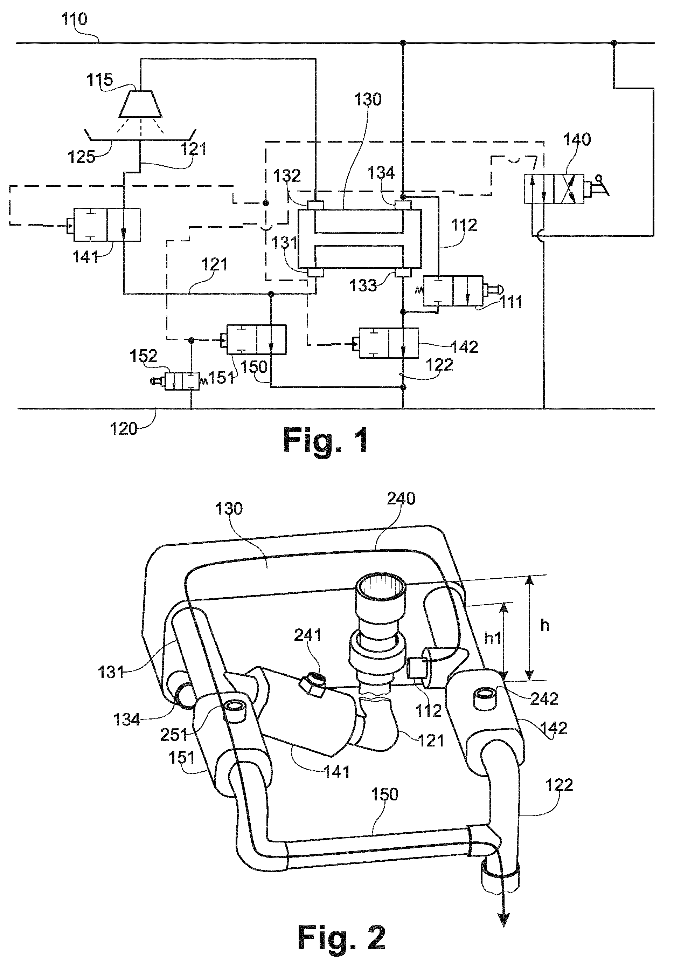

Figure 1, selon un exemple de réalisation, une installation sanitaire mettant en oeuvre le dispositif objet de l'invention comprend une adduction (110) d'eau froide sanitaire sous pression et une canalisation (120) de collecte des eaux usées vers l'égout. L'eau froide sanitaire alimente un récepteur (115), par exemple une douche, où elle est mélangée avec de l'eau chaude, avant de se déverser dans un receveur (125). Ledit receveur est connecté hydrauliquement à l'égout (120) par une canalisation (121) d'évacuation. Pour arriver à l'égout, les eaux usées collectées par le receveur (125) passent par un échangeur à plaques (130) dans lequel elles pénètrent par une première entrée (131) et en sortent par une première sortie (133). Ce même échangeur (130) comprend une seconde entrée (132) à laquelle est connectée une arrivée d'eau froide sanitairee, et une seconde sortie (134) pour l'adduction de cette eau propre vers le récepteur (115). Ainsi, en traversant cet échangeur de chaleur (130) l'eau froide sanitaire destinée au récepteur (115) est réchauffée par le flux des eaux usées.

L'échangeur (130) comprend des plaques ondulées qui favorisent la création d'un écoulement turbulent à l'intérieur de celui-ci, limitant ainsi les risques de dépôt gras ou de débris dans ledit échangeur (130). Néanmoins, malgré ces caractéristiques, il arrive que l'échangeur se colmate ou que des bouchons, notamment de cheveux, se forment, plus particulièrement à la première entrée (131) de l'échangeur (130). Selon un exemple de réalisation du dispositif objet de l'invention, l'échangeur (130) est placé avec ses entrées (131, 132) et sorties (133, 134) orientées horizontalement que qui permet d'augmenter la surface d'échange de l'échangeur sans augmenter de manière trop importante sa hauteur d'encombrement, afin de placer celui-ci, par exemple, dans le solivage d'un plancher.

Selon l'exemple de réalisation de la figure 1, le dispositif objet de l'invention comprend des aménagements hydrauliques pour faire sauter un bouchon causant l'obstruction de l'échangeur (130). À cette fin, le dispositif comprend des vannes (151, 141, 142, 111) à pilotage hydraulique et dont le fonctionnement est déclenché par une vanne à 4 voies (140).

Une première (151) vanne, dite de court-circuit, à commande hydraulique est placée entre la première (131) entrée de l'échangeur et une branche (150), dite de court-circuit, en dérivation de cette première entrée vers l'égout (120).

Une deuxième vanne (141) est placée sur la canalisation (121) mettant en communication l'écoulement du receveur (125) avec la première entrée (131) de l'échangeur. Cette vanne(141) à pilotage hydraulique, est obstruée lorsque son pilote est mis en communication avec la pression du réseau (110).

Une troisième vanne (142) également à pilotage hydraulique, dite d'obturation de l'écoulement, est placée sur la canalisation (122) mettant la première sortie (133) de l'échangeur (130) en communication avec l'égout (120).

Une vanne (111), dite d'alimentation, est placée sur une canalisation (112) montée en dérivation entre la deuxième entrée (132) et la première sortie (133) de l'échangeur. Cette vanne (111) d'alimentation, est préférentiellement à commande manuelle, par exemple au moyen d'un bouton poussoir. Alternativement, ladite vanne (111) est à commande hydraulique et dans ce cas elle est passante lorsque son pilote est mis en communication avec la pression du réseau (110).

En fonctionnement nominal, le pilote de la première vanne (151) est mis en communication avec la pression du réseau par l'intermédiaire de la vanne à 4 voies (140) de sorte que cette première vanne obstrue la canalisation (150) de court circuit. Les pilotes des autres vannes (141, 142, 111) sont mis en communication avec l'égout (120) par l'intermédiaire de la vanne à 4 voies (140) de sorte que la deuxième (141) et la troisième (142) vannes sont passantes, la vanne d'alimentation (111) étant fermée.

Ainsi, les eaux usées collectées au receveur (125) traversent l'échangeur (130) avant de rejoindre l'égout et réchauffent au passage le flux d'eau propre dirigé vers le récepteur (115).

En manoeuvrant la vanne à 4 voies (140), les pilotes de la deuxième (141), et de la troisième (142) vannes sont alimentés, ce qui a pour effet de fermer lesdites vannes.

Le pilote de la vanne (151) de court-circuit est mis en communication avec l'égout de sorte que cette première vanne (151) est passante. En actionnant la vanne d'alimentation (111), de l'eau froide sanitaire à la pression du réseau (110) est envoyée dans l'échangeur (130) à la première sortie (133) de celui-ci, provoquant un flux inverse à celui de l'écoulement normal des eaux usées dans ledit échangeur Ainsi, le flux d'eau propre sous pression traversant l'échangeur (130) de sa première sortie (133) vers sa première entrée (131) se déverse à l'égout (120) par la canalisation (150) de court-circuit.

Cette circulation en sens inverse et sous la charge de la pression du réseau d'eau froide sanitaire, permet de faire sauter le bouchon obstruant l'entrée de l'échangeur et d'envoyer ledit bouchon à l'égout. Ainsi, le flux (240) d'eau froide sanitaire traversant l'échangeur (130) en sens inverse de l'écoulement nominal est un véritable flux de nettoyage.

Figure 2, selon un exemple de réalisation du dispositif objet de l'invention, l'échangeur (130) est placé avec ses entrées (131, 132) et sorties (132, 134) orientée horizontalement ce qui permet d'augmenter la surface d'échange de l'échangeur sans en augmenter de manière trop importante sa hauteur (h) d'encombrement, afin de placer celui-ci, par exemple, dans le solivage d'un plancher.

Selon cet exemple de réalisation, la première entrée (131) et la première sortie (133) sont placées en partie haute de l'échangeur (130), celui-ci joue alors un rôle de siphon dans l'installation sanitaire et les siphons des receveurs connectés audit échangeur sont éventuellement supprimés pour limiter les pertes de charge dans l'écoulement gravitaire des eaux usées. Selon cet exemple de réalisation, une partie non remplie de l'échangeur existe toujours au sommet de celui-ci, à une hauteur correspondant à la hauteur des canalisations d'entrée (131) et de sortie (133) des eaux usées, de sorte qu'une partie de la surface d'échange potentielle de l'échangeur n'est pas utilisée, ledit échangeur ne se remplissant que jusqu'à une hauteur h1 sensiblement égale à (h-d) où d est le diamètre des canalisation d'écoulement des eaux usées. Or, ce diamètre doit être suffisant pour répondre aux normes en la matière en fonction de la nature du ou des receveurs se déversant en passant par l'échangeur. Généralement d=40 mm.

Afin de conserver une section de passage suffisante les vannes pilotées (141,142, 151) installées sur les canalisations recevant des eaux usées sont des vannes de type « à manchon » comportant un pilote (241, 242, 251) apte à introduire entre le corps de ladite vanne et le manchon une pression hydraulique.

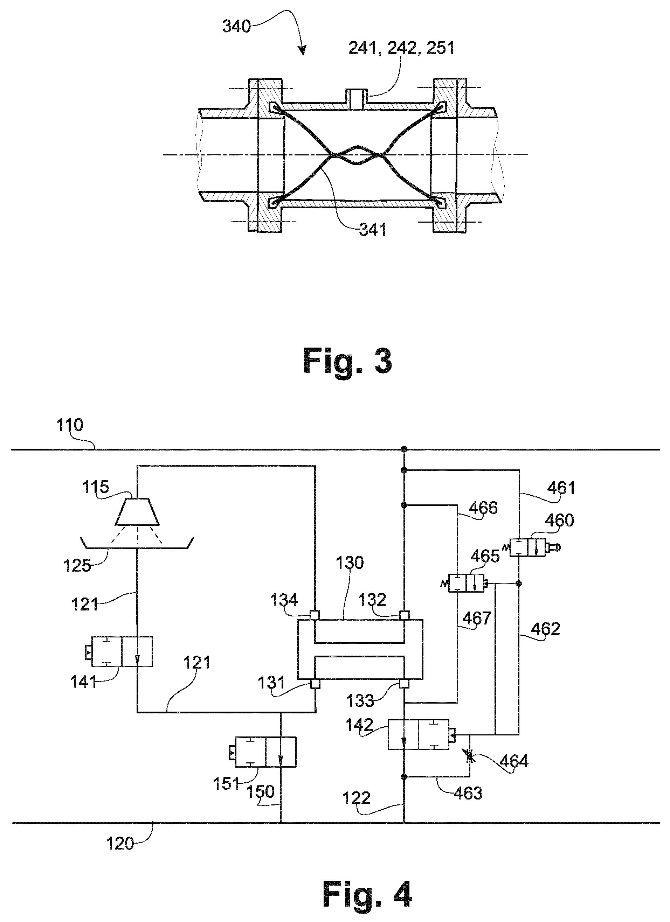

Figure 3, une vanne (340) à manchon est représentée en situation fermée, non passante. Lorsqu'une pression hydraulique est appliquée dans le pilote, le manchon (341) obstrue le passage dans la vanne. Lorsque le pilote est mis en communication avec l'égout, l'élasticité du manchon (341) expulse, par le pilote, le fluide compris entre ledit manchon (341) et la paroi de la vanne, ouvrant à nouveau le passage. La vanne devient passante.

Figure 4, selon un autre exemple de réalisation du dispositif objet de l'invention, une dérivation (461) sur le circuit d'eau froide sanitaire relie ledit circuit à l'entrée d'une vanne (142) à manchon, dite d'obturation de l'écoulement, apte à obturer la première sortie (133) de l'échangeur (130). Une vanne (460), dite de commande de purge, par exemple à bouton-poussoir, normalement fermée, est placée sur cette dérivation du circuit d'eau froide sanitaire. Ainsi, ladite dérivation comprend deux branches, une première branche (461) communique la pression du réseau à la commande (460) de purge et à une deuxième branche (462), comprise entre la commande purge (460) et la commande de la vanne (142) à manchon. Lorsque la commande (460) de purge est au repos, c'est-à-dire que le bouton-poussoir n'est pas manoeuvré, la deuxième branche (462) de la dérivation n'est pas alimentée, et la vanne (142) à manchon d'obturation de l'écoulement est passante laissant les eaux usées s'écouler à l'égout. La deuxième branche (462) de la dérivation du circuit d'eau froide sanitaire, comportant la commande de purge (460), comporte une dérivation (463) en bipasse du pilote de la vanne (142) à manchon. Cette branche (463) en bipasse comprend un étranglement (464) apte à créer une perte de charge conséquente dans ladite branche (463). À titre d'exemple, non limitatif, cet étranglement (464) est réalisé par une pastille d'obturation percée d'un trou de faible diamètre, par exemple un diamètre compris entre 1 mm et 1,5 mm. Alternativement la perte de charge est produite par une valve d'étranglement réglable selon des moyens connus de l'art antérieur.

Une deuxième dérivation (466) piquée sur le circuit d'eau froide sanitaire, met en communication hydraulique ledit circuit avec la première sortie (133) de l'échangeur en amont de la vanne (142) à manchon. Cette deuxième dérivation comprend deux branches (466,467), la communication hydraulique entre ces branches passant par une vanne (465) normalement fermée (non passante) monostable à pilote hydraulique. Ledit pilote est en communication hydraulique avec la deuxième (462) branche de la première dérivation. Ainsi, lorsque la commande de purge (460) est passante, et lorsque la vanne à manchon est obturée, la pression monte dans la deuxième (462) branche de la première dérivation, jusqu'à ce que ladite pression soit suffisante pour actionner le pilote de la vanne (465) monostable, laquelle devient alors passante, mettant la première sortie (133) de l'échangeur (130) en communication avec la pression du réseau, créant ainsi un flux inversé dans ledit échangeur, de la première sortie (133) vers la première entrée (131). Ce flux inversé permet de décolmater l'échangeur (130). À cette fin le dispositif objet de l'invention est réglé, d'une part par la perte de charge créée par les moyens (464) d'étranglement et d'autre part par le tarage du pilote de la vanne (465) monostable. Ainsi, les moyens (464) aptes à créer la perte de charge, sont réglés de sorte que la pression atteinte dans la deuxième branche (462) lorsque la purge (460) est actionnée, soit suffisante pour produire l'ouverture de la vanne (465) monostable une fois la vanne à manchon (142) obturée, mais sans jamais obturer complètement la dérivation (463) en bipasse.

Ainsi, lorsque le bouton-poussoir de la purge (460) est relâché, la pression dans la deuxième branche (462) de dérivation chute peu à peu du fait de l'écoulement limité par les moyens (464) d'étranglement. Ainsi, la vanne (142) à manchon s'ouvre à nouveau et la vanne (465) monostable reprend sa position non passante, l'installation reprenant son fonctionnement nominal. L'ordre dans lequel s'effectue ce retour aux conditions nominales de fonctionnement et le temps nécessaire pour qu'il se réalise, sont réglés par les caractéristiques des moyens (464) de perte de charge et le tarage du pilote de la vanne (465) monostable.

À titre d'exemple non limitatif, le pilote de la vanne (465) monostable est taré à 2 bars (2.10⁵ Pa) et les moyens (464) de création d'une perte de charge consistent en une pastille d'obturation comportant un perçage central d'un diamètre de 1 mm, placée dans la dérivation (463) en bipasse.

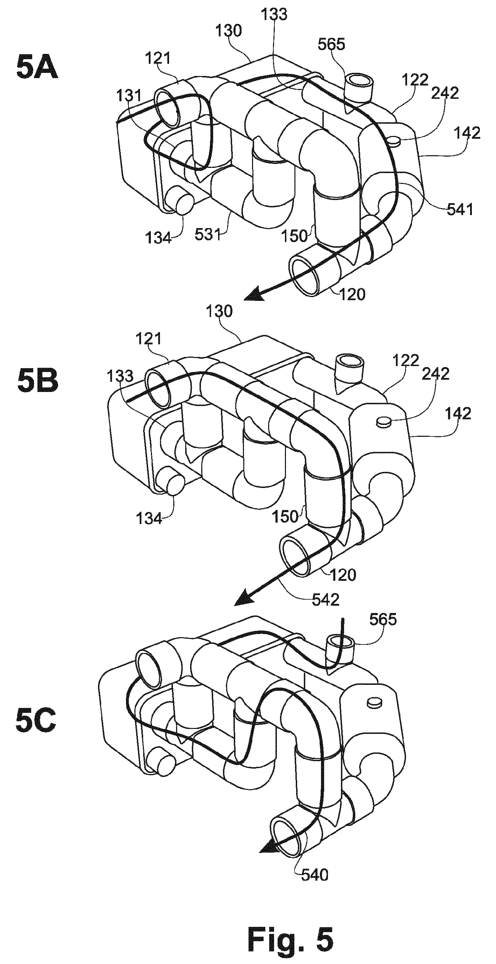

Figure 5, selon un autre exemple de réalisation du dispositif objet de l'invention, les moyens de court-circuit ne comportent pas de vanne. Selon cet exemple de réalisation, la canalisation (150) de court-circuit et la canalisation (121) provenant de la bonde du receveur sont connectées en série et comportent et sont connectées en dérivation à une canalisation (531) d'entrée, elle même liée à l'entrée (131) de l'échangeur (130). Les eaux usées s'écoulant selon un écoulement gravitaire, elles empruntent toujours le chemin le plus directe et présentant le moins de pertes de charge entre un point et un autre.

Figure 5A, en fonctionnement nominal, le flux (541) d'eaux usées traverse l'échangeur en arrivant par la canalisation (121) connectée à la bonde du receveur, puis en empruntant la canalisation d'entrée (531). Ledit flux (541) traverse alors l'échangeur, jusqu'à la première sortie (133), puis vers l'égout (120).

Figure 5B, en cas de colmatage de l'échangeur (130) l'entrée dans l'échangeur (130) n'est pas le chemin le plus direct pour le flux (542) d'eaux usées provenant du receveur, du fait de l'existence de la perte de charge liée au colmatage. Ainsi, ledit flux (542) d'eaux usées emprunte directement la branche (150) en court circuit pour rejoindre l'égout sans passer par l'échangeur (130).

Figure 5C, pour réaliser un décolmatage de l'échangeur (130), un flux (540) sous pression est injecté à la première (133) sortie de l'échangeur par l'intermédiaire d'une branche (565) en dérivation par rapport à la canalisation (122) reliant ladite première sortie (133) à l'égout (120). Cette connexion en dérivation est réalisée en amont de la vanne (142) d'obturation de l'écoulement dans le sens circulation nominal. Ledit flux (540) de nettoyage est injecté alors que ladite vanne à manchon (142) est obturée. Ainsi, le flux (540) de nettoyage pénètre dans l'échangeur (130) par sa première (133) sortie et subit au passage de l'échangeur qu'il décolmate une perte de charge, de sorte qu'en sortant de l'échangeur, par sa première (131) entrée, la pression dudit flux (540) n'est pas suffisante pour que celui-ci puisse remonter la canalisation (121) reliée à la bonde du receveur jusqu'à ladite bonde. Ainsi, le flux (540) emprunte le chemin le plus directe et passe par la canalisation (150) de court-circuit pour rejoindre l'égout.

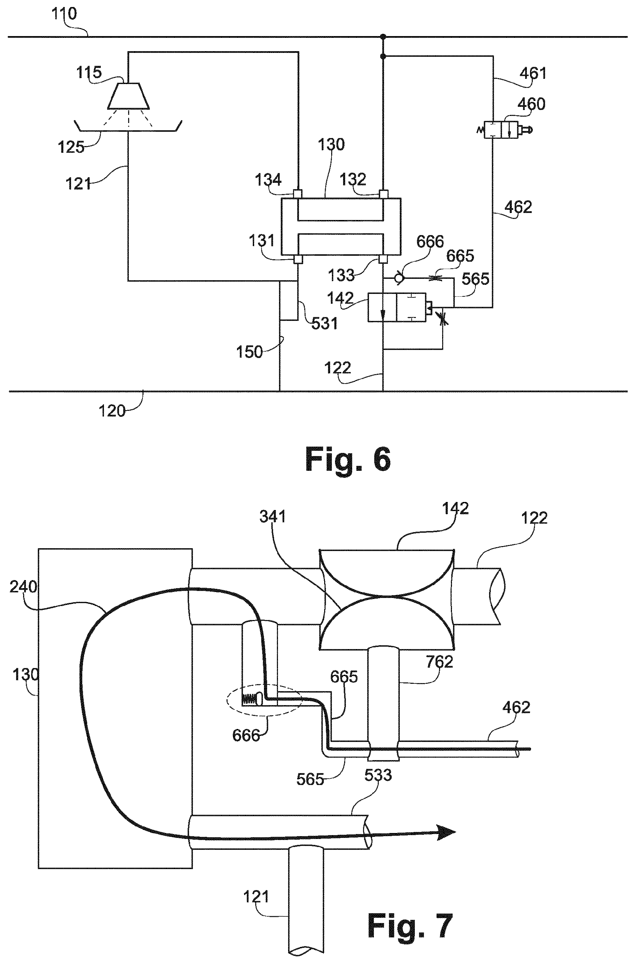

Figure 6, selon un autre mode de réalisation simplifié de la purge, le dispositif objet de l'invention ne comprend pas de vanne monostable. La branche (462) en communication avec le réseau (110) d'eau froide sanitaire par l'intermédiaire de la commande (460) de purge, est, d'une part, connectée au pilote de la vanne (142) à manchon placée sur la première (133) sortie de l'échangeur (130) et d'autre part, en communication hydraulique avec ladite sortie (133) de l'échangeur, par l'intermédiaire d'une branche (565) en dérivation, piquée sur la canalisation d'écoulement, en amont de la vanne (142) à manchon dans le sens d'écoulement nominal. Cette branche (565) en dérivation comprend des moyens (665) pour réaliser une perte de charge comprise entre 1 et 1,5 bars, selon un exemple de réalisation, par exemple en utilisant pour cette branche (565) un tube (665) de diamètre réduit. Ladite branche (565) comporte un clapet (666) anti-retour évitant la pollution du réseau d'eau froide sanitaire par le contenu de l'échangeur (130). La vanne (460) de purge est, selon une variante de réalisation, à pilotage électrique, afin de réaliser une programmation de l'opération de purge.

Figure 7, lorsque la commande de purge est actionnée, l'eau froide sanitaire arrive au pilote de la vanne (142) à manchon d'obturation de l'écoulement par une branche (762) en dérivation, en même temps qu'elle emprunte la branche (565) la reliant à la première (133) sortie de l'échangeur (130). Ainsi, la pression d'obturation appliquée au manchon (341) de la vanne (142) à manchon est égale à la pression engendrée par l'aménagement (665) de perte de charge dans la branche (565) alimentant l'échangeur par sa première sortie (133), de sorte que plus l'échangeur est colmaté et plus la pression de fermeture de la vanne (142) à manchon est élevée. En calibrant lesdites pertes de charges, un équilibre satisfaisant est trouvé entre le débit de purge et le taux de fermeture de la vanne à manchon pour l'ensemble des conditions possibles d'utilisation. Ainsi, selon un exemple de réalisation utilisant un débit de purge de 27,2 litres/min (4,53.10⁻⁴ m³.s⁻¹), la pression appliquée au manchon (341) de la vanne à manchon (142) est de 2,62 bars (2,62. 10⁵ Pa) et conduit à un taux de fermeture de la vanne à manchon (142) de 99,1%. Selon un autre exemple de réalisation utilisant un débit de purge de 23,9 litres/min (3,98.10⁻⁴ m³.s⁻¹), la pression de commande est de 1,98 bars (1,98.10⁵ Pa) et le taux de fermeture de la vanne à manchon atteint 96,7%. Selon un troisième exemple de réalisation, le débit de purge est de 19,3 litres/min (3,22.10⁻⁴ m³.s⁻¹), la pression de commande de la vanne à manchon (142) est de 1,28 bars (1,28.10⁵ Pa)et le taux de fermeture de la vanne à manchon est de 83,6%. Ladite perte de charge (665) est contrôlée, par exemple, par la réduction de section et la longueur de la branche (565) connectée à la première (133) sortie de l'échangeur (130).

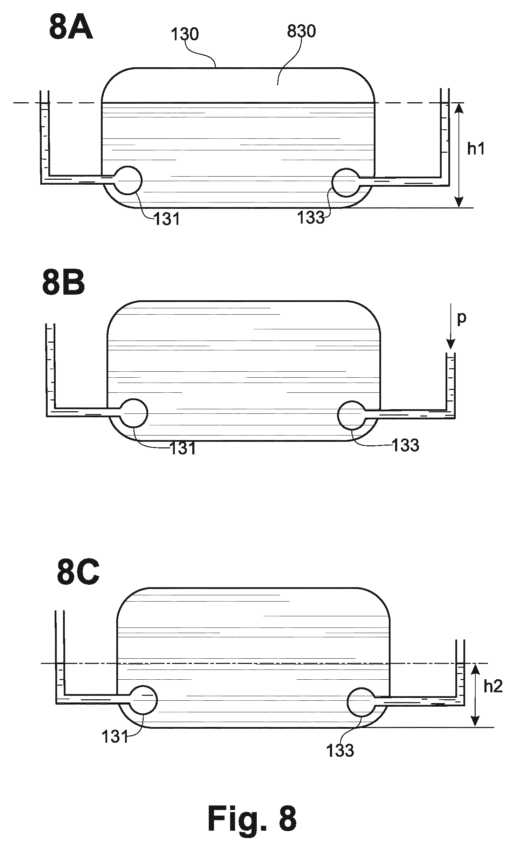

Figure 8, selon un exemple de réalisation du procédé objet de l'invention, l'échangeur (130) joue un rôle de siphon dans l'installation sanitaire et les siphons des receveurs connectés audit échangeur sont supprimés pour limiter les pertes de charge dans l'écoulement gravitaire des eaux usées. Selon cet exemple de réalisation, une partie non remplie de l'échangeur existe toujours au sommet de celui, à une hauteur correspondant à la hauteur des canalisations d'entrée (131) et de sortie (133) des eaux usées, de sorte qu'une partie de la surface d'échange potentielle n'est pas utilisée, l'échangeur ne se remplissant que jusqu'à une hauteur *h1*. Afin d'utiliser le volume non rempli dans l'échangeur, selon un exemple de réalisation, la première entrée (131) et la première sortie (133) de l'échangeur sont avantageusement placées en partie basse de l'échangeur (130).

Figure 8A, en l'absence de mise en oeuvre du procédé de mise en eau objet de l'invention, l'échangeur et le circuit d'évacuation agissent comme un siphon, et une partie (830) de l'échangeur (131) n'est jamais remplie.

Figure 8B, selon une première étape du procédé de mise en eau objet de l'invention, l'alimentation d'eau froide sanitaire est envoyée dans la première sortie (133) de l'échangeur en manoeuvrant la commande de purge (460). La pression d'eau (p) chasse la bulle d'air (830) et rempli l'échangeur (130).

Figure 8C, en replaçant alors l'échangeur en conditions nominales de fonctionnement, c'est-à-dire en relâchant la commande de purge (460), dès lors que la garde d'eau *h2* restant dans les canalisations correspondantes est suffisante, l'air ne pénètre pas dans l'échangeur dont l'intérieur se trouve alors en dépression et ledit échangeur reste intégralement rempli. Ainsi, le rendement de l'installation est très nettement amélioré.

La description ci-avant et les exemples de réalisation montrent que l'invention atteint les objectifs visés, en particulier elle permet de rendre l'installation moins sensible aux phénomènes de colmatage, d'entretenir à distance l'échangeur de l'installation et d'améliorer le rendement de l'installation en optimisant le remplissage de l'échangeur.

## Revendications

1. Dispositif pour la récupération de l'énergie thermique d'un écoulement des eaux usées, comportant un receveur (125) d'eau usées et comprenant :
a. un échangeur (130) à plaques traversé par deux flux fluides séparés :
ai. une première (131) entrée de l'échangeur, placée en communication hydraulique avec l'orifice d'écoulement d'eaux usées du receveur (125) de sorte à créer un premier flux traversant ledit échangeur par écoulement gravitaire entre cette première (131) entrée et une première (133) sortie connectée à l'égout (120) l'échangeur agissant comme un siphon dans l'écoulement ;
aii. une deuxième (132) entrée de l'échangeur, placée en communication hydraulique avec une canalisation (110) d'eau propre à la pression du réseau de sorte à créer un second flux traversant l'échangeur (130) sans se mêler au premier flux, entre cette deuxième (132) entrée et une deuxième (134) sortie dudit échangeur ;
b. des moyens (150) de connexion, aptes à réaliser une connexion hydraulique, dite de court circuit, entre la première (131) entrée de l'échangeur et l'égout (120) ;
c. **caractérisé en ce qu'**il comporte des moyens (151, 141, 142, 111, 460, 465, 565) de connexion pilotés pour réaliser une connexion hydraulique temporaire entre l'arrivée (110) d'eau froide sanitaire à la pression du réseau et la première sortie (133) de l'échangeur de sorte à créer un flux (240, 540) d'eau froide sanitaire, dit de nettoyage, passant par l'échangeur (130), entre l'arrivée (110) d'eau propre et l'égout (120).

2. Dispositif selon la revendication 1, dans lequel les moyens de connexion en court-circuit comporte :
bi. une vanne (151), dite de cour-circuit.

3. Dispositif selon la revendication 2, dans lequel la vanne (151) de court-circuit est une vanne pilotée et qu'il comprend des moyens (152) de pilotage de ladite vanne (151).

4. Dispositif selon la revendication 1, dans lequel les moyens de connexion pilotés comprennent :
bii. une vanne (141) pilotée sur la connexion hydraulique (121) entre l'évacuation du receveur (125) et la première entrée (131) de l'échangeur.

5. Dispositif selon la revendication 1, dans lequel les moyens de connexion pilotés comprennent :
biii. vanne(142) pilotée dite d'obturation de l'écoulement entre la première sortie (131) de l'échangeur et l'égout (120).

6. Dispositif selon la revendication 1, dans lequel les moyens de connexion pilotés (141, 142, 151) placés sur les canalisations (121, 122, 150) véhiculant des eaux usées sont des vannes à manchon (340) pilotées par la pression du réseau (110) d'eau froide sanitaire.

7. Dispositif selon la revendication 6, dans lequel le pilotage des vannes (141, 142, 151) à manchon est obtenu au moyen d'une vanne à 4 voies (140) alimentée par le réseau d'eau froide sanitaire.

8. Dispositif selon la revendication 6, comportant :
d. des moyens (460, 565, 465, 742, 467), dits purge, aptes à mettre en communication avec le réseau (110) d'eau froide sanitaire la première (133) sortie de l'échangeur (130) et à mettre en communication le pilote (242) de la vanne (142) à manchon d'obturation de l'écoulement avec une pression d'obturation.

9. Dispositif selon la revendication 8, dans lequel les moyens de purge comportent :
di. un distributeur (465) monostable normalement fermé et ouvert pour une pression définie, apte à mettre la première (133) sortie de l'échangeur (130) en communication avec le réseau (110) d'eau froide sanitaire en amont de la vanne (142) d'obturation de l'écoulement et de l'égout (120) ;
dii. Une branche (462) mettant en communication hydraulique le pilote dudit distributeur (465) monostable avec le pilote (242) de la (142) vanne à manchon d'obturation de l'écoulement et le réseau (110) d'eau froide sanitaire par l'intermédiaire d'une vanne (460), dite vanne de purge.

10. Dispositif selon la revendication 8, dans lequel les moyens de purge comportent :
diii. une vanne (460), dite vanne de purge, et un circuit (462) aptes à mettre en communication hydraulique selon deux branches (565, 662) en dérivation, le pilote (242) de la troisième (142) vanne à manchon et la première (133) sortie de l'échangeur (130) avec le réseau (110) d'eau froide sanitaire ;
div. des moyens (565, 566) aptes à créer un perte de charge dans la branche (565) en communication hydraulique avec la première (133) sortie de l'échangeur.

11. Dispositif selon la revendication 10, dans lequel la vanne (460) de purge est une vanne programmable.

12. Dispositif selon la revendication 8, comportant :
e. une branche (463), dite de retour progressif, mettant en communication hydraulique en dérivation le pilote de la vanne (142) à manchon d'obturation de l'écoulement et l'égout (120), laquelle branche (463) comprend des moyens (464) aptes à réaliser une perte de charge dans ladite branche.

13. Dispositif selon la revendication 12, dans lequel les moyens (464) aptes à réaliser une perte de charge dans la branche (463) de retour progressif comprennent une pastille d'obturation comportant une ouverture de faible diamètre.

14. Dispositif selon la revendication 12, dans lequel les moyens (464)aptes à réaliser une perte de charge dans la branche (463) de retour progressif comprennent une valve d'étranglement réglable.

15. Procédé pour la mise en eau d'un dispositif selon la revendication 12, **caractérisé en ce qu'**il comprend une étape consistant à remplir l'échangeur (130) et chasser l'air (830) emprisonnée dans la partie de l'échangeur traversée par le flux d'eau usées en actionnant la vanne (460) de purge.

## Patentansprüche

1. Vorrichtung für die Wärmeenergierückgewinnung aus einem Abwasserstrom eines Aufnehmers (125), umfassend:
a. einen Plattenwärmetauscher (130), der von zwei getrennten Flüssigkeitsströmen durchquert wird:
ai. einen ersten Einlauf (131) des Wärmetauschers, der mit der Abwasserstromöffnung des Aufnehmers (125) hydraulisch derart verbunden ist, dass ein erster den Wärmetauscher durchquerender Strom erzeugt wird, der durch die Schwerkraft zwischen diesem ersten Einlauf (131) und einem ersten Auslauf (133) fließt, welcher an die Abwasserkanalisation (120) angeschlossen ist, wobei der Wärmetauscher beim Fließvorgang als Siphon fungiert;
aii. einen zweiten Einlauf (132) des Wärmetauschers, der mit einer Kanalisation (110) mit sauberem Wasser zum gegebenen Druck des Wassernetzes hydraulisch derart verbunden ist, dass zwischen diesem zweiten Einlauf (132) und einem zweiten Auslauf (134) des Wärmetauschers ein zweiter den Wärmetauscher (130) durchquerender Strom erzeugt wird, ohne sich mit dem ersten Strom zu vermischen;
b. Verbindungsmittel (150), die zwischen dem ersten Einlauf (131) des Wärmetauschers und der Abwasserkanalisation (120) eine sogenannte hydraulische Kurzschlussverbindung herstellen können,
c. **dadurch gekennzeichnet, dass** sie Verbindungsmittel (151, 141, 142, 111, 460, 465, 565) umfasst, die gesteuert werden, um zwischen dem Einlauf (110) von kaltem Brauchwasser (110) zum gegebenen Druck des Wassernetzes und dem ersten Auslauf (133) des Wärmetauschers derart eine vorübergehende hydraulische Verbindung herzustellen, dass ein sogenannter Reinigungswasserstrom (240, 540) aus kaltem Brauchwasser erzeugt wird, der zwischen dem Einlauf (110) von sauberem Wasser und der Abwasserkanalisation (120) durch den Wärmetauscher (130) fließt.

2. Vorrichtung nach Anspruch 1, bei der die Kurzschlussverbindung umfasst:
bi. ein sogenanntes Kurzschlussventil (151).

3. Vorrichtung nach Anspruch 2, bei der das Kurzschlussventil (151) ein gesteuertes Ventil ist und für das besagte Ventil (151) Mittel zum Steuern (152) umfasst.

4. Vorrichtung nach Anspruch 1, bei der die gesteuerten Verbindungsmittel umfassen:
bii. ein gesteuertes Ventil (141) an der Hydraulikverbindung (121) zwischen dem Abfluss der Aufnahme (125) und dem ersten Einlauf (131) des Wärmetauschers.

5. Vorrichtung nach Anspruch 1, bei der die gesteuerten Verbindungsmittel umfassen:
biii. ein gesteuertes Ventil (142) für das Absperren des Abfließens zwischen dem ersten Auslauf (131) des Wärmetauschers und der Abwasserkanalisation (120).

6. Vorrichtung nach Anspruch 1, bei der die gesteuerten Verbindungsmittel (141, 142, 151), die an den Kanalisationen (121, 122, 150) angebracht sind und Abwasser transportieren, über den Druck des kalten Brauchwassernetzes (110) gesteuerte Muffenventile (340) sind.

7. Vorrichtung nach Anspruch 6, bei der das Steuern der Muffenventile (141, 142, 151) mithilfe eines 4-Wege-Ventils (140) erreicht wird, das vom kalten Brauchwassernetz gespeist wird.

8. Vorrichtung nach Anspruch 6, umfassend:
d. sogenannte Entlüftungsmittel (460, 565, 465, 742, 467), die den ersten Auslauf (133) des Wärmetauschers (130) mit dem kalten Brauchwassernetz (110) in Verbindung bringen können und die Steuerung (242) des Muffenventils (142) für das Sperren des Abfließens mit einem Sperrdruck in Verbindung bringen können.

9. Vorrichtung nach Anspruch 8, bei der die Entlüftungsmittel umfassen:
di. ein monostabiles Steuerventil (465), das normalerweise geschlossen und bei einem definierten Druck offen ist und den ersten Auslauf (133) des Wärmetauschers (130) mit dem kalten Brauchwassernetz (110) vor dem Absperrventil (142) des Abfließens und vor der Abwasserkanalisation (120) in Verbindung bringen kann;
dii. einen Seitenkanal (462), der die Steuerung des monostabilen Steuerventils (465) mit der Steuerung (242) des Muffenventils (142) zum Absperren des Abfließens und das kalte Brauchwassernetz (110) über ein so genanntes Entlüftungsventil (460) hydraulisch verbindet.

10. Vorrichtung nach Anspruch 8, bei der die Entlüftungsmittel umfassen:
diii. ein so genanntes Entlüftungsventil (460) und eine Leitung (462), die entlang zwei umgeleiteten Seitenkanälen (565, 662) die Steuerung (242) des dritten Muffenventils (142) und den ersten Auslauf (133) des Wärmetauschers (130) mit dem kalten Brauchwassernetz (110) hydraulisch verbinden können;
div. Mittel (565, 566), die im, mit dem ersten Auslauf (133) des Wärmetauschers hydraulisch verbundenen Seitenkanal (565) einen Druckverlust erzeugen können.

11. Vorrichtung nach Anspruch 10, bei der das Entlüftungsventil (460) ein programmierbares Ventil ist.

12. Vorrichtung nach Anspruch 8, umfassend:
e. einen Seitenkanal (463) mit einem so genannten stufenweisen Rücklauf, der über eine Umleitung die Steuerung (142) des Muffenventils zum Absperren des Abfließens und die Abwasserkanalisation (120) hydraulisch verbindet, wobei dieser Seitenkanal (463) Mittel (464) umfasst, die einen Druckverlust in diesem Kanal erzeugen können.

13. Vorrichtung nach Anspruch 12, bei der die Mittel (464), die einen Druckverlust im Seitenkanal (463) mit stufenweisem Rücklauf erzeugen können, ein Verschlussplättchen mit einer Öffnung von kleinem Durchmesser umfassen.

14. Vorrichtung nach Anspruch 12, bei der die Mittel (464), die einen Druckverlust im Seitenkanal (463) mit stufenweisem Rücklauf erzeugen können, ein einstellbares Drosselventil umfassen.

15. Verfahren für die Füllung einer Vorrichtung nach Anspruch 12, **dadurch gekennzeichnet, dass** es einen Schritt umfasst, bei dem der Wärmetauscher (130) gefüllt wird und der vom Abwasser durchquerte Bereich des Wärmetauschers entlüftet (830) wird, indem das Entlüftungsventil (460) betätigt wird.

## Claims

1. A device for recovering thermal energy from a flow of wastewater from a tray (125), which device comprises:
a. a plate heat exchanger (130) traversed by two different fluid flows:
ai. a first (131) exchanger inlet, placed to communicate hydraulically with the waste water flow opening of the tray (125) so as to create a first flow through said exchanger by gravity flow between that first (131) inlet and a first (133) outlet connected to the drain (120), wherein the exchanger acts as a trap in the flow;
aii. a second (132) exchanger inlet, placed to communicate hydraulically with a clean water pipe (110) at the network pressure so as to create a second flow that passes through the exchanger (130) without being mixed with the first flow, between said second inlet (132) and a second outlet (134) of said exchanger;
b. connection means (150), adapted to make a hydraulic connection known as a short circuit connection, between the first exchanger inlet (131) and the drain (120).
c. **characterized in that** it comprises externally operated connection means (151, 141, 142, 111, 460, 465, 565) to make a temporary hydraulic connection between the supply (110) of domestic cold water at the network pressure and the first exchanger outlet (133) so as to create a flow (240, 540) of domestic cold water known as the cleaning flow, passing through the exchanger (130), between the supply (110) of clean water and the drain (120).

2. A device according to claim 1, wherein the short-circuit connection means comprise:
bi. a valve (151), known as the short-circuit valve.

3. A device according to claim 2, wherein the short-circuit valve (151) is an externally operated valve and wherein the device comprises means (152) for externally operating said valve (151).

4. A device according to claim 1, wherein the externally operated connection means comprise:
bii. an externally operated valve (141) on the hydraulic connection (121) between the drain of the tray (125) and the first exchanger inlet (131).

5. A device according to claim 1, wherein the externally operated connection means comprise:
biii. an externally operated valve (142) known as the shut-off valve of the flow between the first exchanger outlet (131) and the drain (120).

6. A device according to claim 1, wherein the externally operated connection means (141, 142, 151) placed on the pipes (121, 122, 150) carrying waste water are pinch valves (340) operated by the pressure of the domestic cold water network (110).

7. A device according to claim 6, wherein the external operation of the pinch valves (141, 142, 151) is achieved by means of a four-way valve (140) supplied by the domestic cold water network.

8. A device according to claim 6, comprising:
d. means (460, 565, 465, 742, 467) known as purges, adapted to put into communication with the domestic cold water network (110) the first outlet (133) of the exchanger (130) and put into communication the pilot (242) of the pinch valve (142) that shuts off the flow with shut-off pressure.

9. A device according to claim 8, wherein the purging means comprise:
di. a normally closed monostable directional valve (465) that is open at a definite pressure, adapted to put the first (133) outlet of the exchanger (130) in communication with the domestic cold water network (110) upstream from the valve (142) that shuts off the flow and the drain (120);
dii. a branch (462) that puts into hydraulic communication the pilot of said monostable directional valve (465) with the pilot (242) of the pinch valve (142) that shuts off the flow and the domestic cold water network (110) through a valve (460) known as the purge valve.

10. A device according to claim 8, wherein the purging means comprise:
diii. a valve (460), known as the purge valve and a circuit (462) adapted to put into hydraulic communication along two bypass branches (565, 662) the pilot (242) of the third (142) pinch valve and the first outlet (133) of the exchanger (130) with the domestic cold water network (110);
div. means (565, 566) adapted to create head loss in the branch (565) that communicates hydraulically with the first exchanger outlet (133).

11. A device according to claim 10, wherein the purge valve (460) is a programmable valve.

12. A device according to claim 8, comprising:
e. a branch (463), known as the progressive return branch, which puts into bypass hydraulic communication the pilot of the pinch valve (142) that shuts off the flow and the drain (120), which branch (463) comprises means (464) adapted to create head loss in said branch.

13. A device according to claim 12, wherein the means (464) adapted to create head loss in the progressive return branch (463) comprise a core plug provided with an opening with a small diameter.

14. A device according to claim 12, wherein the means (464) adapted to create head loss in the progressive return branch (463) comprise an adjustable throttle valve.

15. A method for filling a device according to claim 12 with water, **characterized in that** it comprises a step consisting in filling the exchanger (130) and driving out the air (830) trapped in the part of the exchanger through which the waste water passes, using the purge valve (460).
